(19) 

Europäisches Patentamt
European Patent Office
Office européen des brevets

(11) **EP 4 782 485 A1**

(12) **EUROPEAN PATENT APPLICATION**
published in accordance with Art. 153(4) EPC

(43) Date of publication:
**29.07.2026  Bulletin 2026/31**

(21) Application number: **24868649.5**

(22) Date of filing: **13.09.2024**

(51) International Patent Classification (IPC):
*C08J 5/18* (2006.01)        *C08L 67/02* (2006.01)
*B29C 55/02* (2006.01)

(52) Cooperative Patent Classification (CPC):
**B29C 55/02; C08J 5/18; C08L 67/02**

(86) International application number:
**PCT/KR2024/014068**

(87) International publication number:
**WO 2025/063672 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.09.2023  KR 20230126579**

(71) Applicant: **SK Chemicals Co., Ltd.
Seongnam-si, Gyeonggi-do 13494 (KR)**

(72) Inventors:
• **KIM, Ha-Neul**
  **Seongnam-si, Gyeonggi-do 13494 (KR)**
• **KIM, Eui-Su**
  **Seongnam-si, Gyeonggi-do 13494 (KR)**
• **LEE, Boo-Youn**
  **Seongnam-si, Gyeonggi-do 13494 (KR)**

(74) Representative: **Dehns
10 Old Bailey
London EC4M 7NG (GB)**

(54) **POLYESTER-BASED ORIENTED FILM, MANUFACTURING METHOD THEREOF, AND ARTICLE FORMED THEREFROM**

(57)    The present invention relates to a polyester-based oriented film, a manufacturing method thereof, and an article formed therefrom. The polyester-based oriented film comprises a copolymerized polyester resin obtained by the copolymerization of a diol component and a dicarboxylic acid component, and exhibits a tear index of less than 2.5. The polyester-based oriented film according to the present invention can be useful as a heat shrinkable film applied as packaging and/or a label of a plastic container. In particular, the polyester-based oriented film is excellent in terms of heat shrinkage, tear index, and tearing properties and thus does not undergo deformation when applied to a container, and can be removed evenly and cleanly along a removal line when separated from the container. Therefore, the polyester-based oriented film enables articles such as packaging and labels of high quality, and can improve recycling process efficiency.

EP 4 782 485 A1

## Description

### Technical Field

The present invention relates to a stretched polyester-based film having heat shrinkage properties and excellent removability when separated from a container, to a process for preparing the same, and to an article formed therefrom.

### Background Art

In recent years, as the use of plastic packaging containers has rapidly increased, international environmental regulations thereon have been strengthened. Accordingly, industry interest in sustainable packaging is growing. In addition, it is necessary to, for example, remove labels from beverage containers when recyclable waste is separately disposed of. Therefore, there is a need to develop resins and films for labels that are readily removed from containers and have shrinkage properties at a high level.

However, for polystyrene and oriented polystyrene (OPS), which are widely used as materials for heat-shrinkable film labels, there is a problem in that thermal resistance and heat-shrinkage characteristics are insufficient. In response, to complement these problems, the development of heat-shrinkable films using polyester resins has been actively carried out.

In general, however, a heat-shrinkable polyester film containing a polyester resin has high tear strength in the machine direction, whereas its tear strength in the direction perpendicular thereto is low, which causes a problem in that the film is not cleanly removed along the intended removal line when removed from the container after being applied as a label.

Accordingly, there is a need to develop a polyester film that has excellent shrinkage properties in terms of shrinkage stress and shrinkage rate, and excellent removability from containers, to increase the efficiency of the recycling process.

[Prior Art Document]

Patent Document

(Patent Document 1) Korean Laid-open Patent Publication No. 2002-0062838

### Detailed Description of the Invention

### Technical Problem

The present inventors have conducted various studies in order to solve the above-mentioned problems in the art. As a result, it has been discovered that when the tensile strength and tear index of a stretched polyester-based film prepared from a polyester resin is controlled, it can be advantageously used as a heat-shrinkable film to be applied as a packaging and/or label for plastic containers; and that, in particular, a stretched polyester-based film can be obtained that has excellent heat shrinkage rate, tear index, and tear properties, does not cause deformation when applied to a container, and can be readily removed when separated from the container.

Accordingly, an object of the present invention is to provide a stretched polyester-based film having excellent shrinkage properties by virtue of an optimized tear index and excellent removability when separated from a container, a process for preparing the same, and an article formed therefrom.

### Solution to the Problem

In order to accomplish the above object, the present invention provides a stretched polyester-based film, which comprises a copolymerized polyester resin in which a diol component and a dicarboxylic acid component are copolymerized, and which has a tear index represented by the following Equation 1 of less than 2.5:

$$[\text{Equation 1}]$$

$$Tear\ index = \frac{TS_{MD}}{(TS_{TD})^2} \times \frac{1}{DT - Tg}$$

In Equation 1, $TS_{MD}$ is the tear strength (N/mm) in the machine direction (MD) of a specimen of the stretched polyester-based film, which is a numerical value excluding the unit, $TS_{TD}$ is the tear strength (N/mm) in the direction (TD) perpendicular to the machine direction of the stretched polyester-based film specimen, which is a numerical value excluding the unit, DT is the stretching temperature (°C) of the stretched polyester-based film, which is a numerical value excluding the unit, and Tg is the glass transition temperature (°C) of the polyester resin, which is a numerical value excluding the unit.

In addition, the present invention provides an article, which is prepared from the stretched polyester-based film.

**Advantageous Effects of the Invention**

The stretched polyester-based film according to the present invention satisfies a specific range of tear index, whereby it has excellent heat shrinkage properties, does not cause deformation when applied to a container, and can be readily removed from the container when separated from the container.

Therefore, the stretched polyester-based film according to the present invention can be advantageously used as a heat-shrinkable film for packaging and/or labels for plastic containers.

Further, the stretched polyester-based film according to the present invention can be removed evenly and neatly along the removal line when separated from the container by virtue of its excellent tearing properties. Thus, it can not only achieve excellent quality in products such as packaging materials and labels, but also enhance the efficiency of the recycling process.

**Best Mode for Carrying out the Invention**

Hereinafter, the present invention will be described in detail. The present invention herein is not limited to the disclosures given below, but it may be modified into various forms as long as the gist of the invention is not changed.

In the present specification, the term "comprising" is intended to specify a particular characteristic, region, step, process, element, and/or component. It does not exclude the presence or addition of any other characteristic, region, step, process, element, and/or component, unless specifically stated to the contrary.

All numbers and expressions related to the quantities of components, reaction conditions, and the like used herein are to be understood as being modified by the term "about," unless otherwise indicated.

In the present specification, the term "residue" refers to a certain moiety or unit derived from a specific compound and contained in the resulting material of a chemical reaction when the specific compound participates in the chemical reaction. Specifically, the "residue" of the dicarboxylic acid component or the "residue" of the diol component each refers to a moiety derived from the dicarboxylic acid component or a moiety derived from the diol component in a copolymerized polyester resin formed by an esterification reaction or a polycondensation reaction.

In general, a stretched polyester-based film has a tear strength in the machine direction (MD) (hereinafter referred to as MD tear strength) that is greater than the tear strength in the direction (TD) (hereinafter referred to as TD tear strength) perpendicular to the machine direction.

When such a stretched polyester-based film is applied as a label on a container and then separated for recycling, the lower the MD tear strength, the easier it is to tear, which is more advantageous for being removed from the container.

In addition, when a stretched polyester-based film is applied as a label on a container and then separated for recycling, the separation form may vary depending on the TD tear strength and the ratio of the MD tear strength and the TD tear strength, as well as the MD tear strength. If the MD tear strength is too high, it may be difficult for the label to be separated from the container. If the TD tear strength is too low, when the label is separated from the container, for example, by tearing it, the label may deviate from the removal line and may not tear smoothly. In particular, if the MD tear strength is too high, thereby making the ratio of the MD tear strength and the TD tear strength excessively large, it may be difficult to achieve excellent quality when the stretched polyester-based film is applied to a label of a container.

That is, when appropriate MD tear strength, TD tear strength, and a ratio of the MD tear strength and the TD tear strength are achieved, the label can be separated evenly, that is, it can be removed neatly along the removal line without sliding sideways when torn or deviating from the removal line. Thus, it is possible to not only achieve excellent quality of articles (products) such as packaging materials and labels, but also enhance the efficiency of the recycling process.

Accordingly, in order to achieve the above effects, it is very important to control not only the MD tear strength of the stretched polyester-based film, but also the TD tear strength and the ratio of these tear strengths (tear ratio), thereby optimizing the tear index.

In particular, the tear index calculated using the MD tear strength, TD tear strength, and the ratio of these tear strengths not only indicates the ease of removal from a plastic container, but can also be an important indicator of the quality of articles (products) such as packaging materials and labels and the efficiency of the recycling process.

The tear index may vary depending on the type of resin contained in the stretched polyester-based film, the types of monomers constituting the resin, the physical properties of the resin, the stretching temperature, the physical properties of the stretched polyester-based film prepared from the resin, and the like.

In the present invention, the tear index of the stretched polyester-based film can be controlled by variously adjusting the above conditions. By virtue of the tear index thus controlled, the stretched polyester-based film according to the present invention can be advantageously used as a heat-shrinkable film for packaging materials and/or labels for plastic containers (e.g., PET bottles). Further, the stretched polyester-based film of the present invention has technical significance in that it does not cause deformation when applied to a container, and it is readily separated from a plastic container when recycled, thereby significantly enhancing the efficiency of the recycling process.

Hereinafter, this will be described in detail.

**Stretched polyester-based film**

The stretched polyester-based film according to an embodiment comprises a copolymerized polyester resin in which a diol component and a dicarboxylic acid component are copolymerized, and it has a tear index represented by the following Equation 1 of less than 2.5:

[Equation 1]

$$Tear\ index = \frac{TS_{MD}}{(TS_{TD})^2} \times \frac{1}{DT - Tg}$$

In Equation 1, $TS_{MD}$ is the tear strength (N/mm) in the machine direction (MD) of a specimen of the stretched polyester-based film, which is a numerical value excluding the unit, $TS_{TD}$ is the tear strength (N/mm) in the direction (TD) perpendicular to the machine direction of the stretched polyester-based film specimen, which is a numerical value excluding the unit, DT is the stretching temperature (°C) of the stretched polyester-based film, which is a numerical value excluding the unit, and Tg is the glass transition temperature (°C) of the polyester resin, which is a numerical value excluding the unit.

As the stretched polyester-based film has excellent shrinkage characteristics and, at the same time, satisfies a tear index of less than 2.5 according to the above Equation 1, it can be readily removed from a container, thereby enhancing the efficiency of the recycling process.

Specifically, the tear index represented by the above Equation 1 may be an indicator of the ease of removal and uniformity when the stretched polyester-based film is applied to a label of a container and then separated. For example, as the tear index according to Equation 1 satisfies the above range, the label can be readily separated by being neatly torn parallel to the direction in which it is to be removed without deviating from the removal line; thus, the ease and uniformity of removal are excellent. The tear index may vary depending on the TD tear strength, MD tear strength, stretching temperature, and glass transition temperature of the resin.

That is, the tear index is a value obtained by dividing the tear ratio, which stands for the ratio of the MD tear strength to the square of the TD tear strength of the stretched polyester-based film ($TS_{MD}/(TS_{TD})^2$), by the difference between the stretching temperature and the glass transition temperature of the resin (DT - Tg). A low tear index is advantageous for achieving the desired optimal tear strength and allows easy, uniform, and neat removal (tearing) from the container, whereby it is understood that the efficiency of the recycling process is excellent.

In the present specification, the stretched polyester-based film may be a film obtained by extruding the polyester resin into a sheet (forming an unstretched sheet) and then stretching the sheet.

Specifically, the stretched polyester-based film may be a stretched film prepared through an extrusion (or melt-extrusion) step of the polyester resin or a mixed resin comprising the polyester resin, a stretching step, and/or a heat-setting step. The specific processing method of the stretched polyester-based film is as described below.

The tear index of the stretched polyester-based film may be less than 2.5, specifically, 2.4 or less, 2.3 or less, 2.2 or less, 2.1 or less, 2.0 or less, 1.9 or less, 1.8 or less, 1.7 or less, 1.6 or less, or 1.5 or less. For example, the tear index of the stretched polyester-based film may be greater than 0 to less than 2.5, 0.01 to 2.4, 0.01 to 2.0, 0.01 to 1.9, 0.01 to 1.8, 0.01 to 1.5, 0.05 to 2.4, 0.05 to 2.0, 0.05 to 1.9, 0.05 to 1.8, 0.05 to 1.5, 0.1 to 2.4, 0.1 to 2.0, 0.1 to 1.9, 0.1 to 1.8, or 0.1 to 1.5.

When the tear index of the stretched polyester-based film satisfies the above range, appropriate TD tear strength and MD tear strength, as well as a tear ratio in an optimal range suitable for the intended use, can be achieved. In addition, when the stretched polyester-based film is applied to a label of a container, it exhibits excellent heat shrinkage properties, and the label can be readily removed from the container and can be neatly removed along the guided removal line, thereby enhancing the efficiency of the recycling process.

In addition, in order to achieve the effect desired in the present invention, it is important to control $TS_{MD}$, $TS_{TD}$, and the ratio thereof while the range of the tear index is satisfied.

In Equation 1, $TS_{MD}$ is the tear strength (N/mm) in the machine direction (MD) of a specimen of the stretched polyester-based film. It may be 50 N/mm or less, 48 N/mm or less, 46 N/mm or less, or 45 N/mm or less, or it may be 1 to 50 N/mm, 3 to 50 N/mm, 3 to 46 N/mm, 3 to 45 N/mm, 5 to 50 N/mm, 5 to 46 N/mm, 5 to 45 N/mm, 7 to 50 N/mm, 7 to 46 N/mm, 7 to 45 N/mm, 10 to 50 N/mm, 10 to 46 N/mm, 10 to 45 N/mm, 10 to 35 N/mm, 10 to 33 N/mm, or 10 to 32 N/mm.

When the $TS_{MD}$ satisfies the above range, the label can be readily removed when separated from the container, thereby enhancing the efficiency of the recycling process. If the $TS_{MD}$ is outside the above range, when the film is applied to a label of a container, the label may not be readily removed from the container. In particular, if the $TS_{MD}$ exceeds the above range, it may be difficult to separate the label from the container, which may deteriorate the efficiency of the recycling process.

The $TS_{MD}$ is measured according to ASTM D1922 by extruding a prepared copolymerized polyester resin into a sheet, stretching it by 500% in the direction perpendicular to the machine direction, and then using a TGT-01 Tearing Tester from Leading Instruments under a weight (g) condition of 16 times the thickness ($\mu$m) of the stretched polyester film. The resulting value is converted based on the thickness of the stretched polyester-based film.

In Equation 1, $TS_{TD}$ is the tear strength (N/mm) in the direction (TD) perpendicular to the machine direction of the stretched polyester-based film specimen. It may be 5.0 N/mm or less, 4.5 /mm or less, 4.0 N/mm or less, 3.5 N/mm or less, 3.0 N/mm or less, or 2.5 N/mm or less, or it may be 0.5 to 5.0 N/mm, 0.5 to 4.5 N/mm, 1.0 to 5.0 N/mm, 1.0 to 4.5 N/mm, 1.1 to 5.0 N/mm, 1.1 to 4.5 N/mm, 1.1 to 2.0 N/mm, 1.2 to 5.0 N/mm, 1.2 to 4.5 N/mm, 1.2 to 4.0 N/mm, 1.2 to 3.5 N/mm, 1.2 to 3.0 N/mm, 1.2 to 2.5 N/mm, 1.2 to 2.3 N/mm, 1.2 to 2.0 N/mm, 1.2 to 1.8 N/mm, 1.2 to 1.6 N/mm, or 1.2 to 1.5 N/mm.

When the $TS_{TD}$ satisfies the above range, the label can be readily removed from the container and can be neatly removed along the guided removal line, thereby enhancing the efficiency of the recycling process. If the $TS_{TD}$ is outside the above range, when the film is applied to a label of a container, the label may be too easily torn or may deviate from the guided removal line when torn, thereby making the removal thereof difficult.

The $TS_{MD}$ is measured according to ASTM D1922 by extruding a prepared copolymerized polyester resin into a sheet, stretching it by 500% in the direction parallel to the machine direction (MD), and then using a TGT-01 Tearing Tester from Leading Instruments under a weight (g) condition of 8 times the thickness ($\mu$m) of the stretched polyester film. The resulting value is converted based on the thickness of the stretched polyester-based film.

In addition, in Equation 1, $TS_{MD}/(TS_{TD})^2$ stands for the tear ratio. It may be 1 to 30, 1 to 29, 1 to 28, 1 to 26, 1 to 25, 1 to 22, 1 to 20, 1 to 18, 1 to 17, 1 to 15, 1 to 13, 1 to 12, 3 to 30, 3 to 29, 3 to 28, 3 to 26, 3 to 25, 3 to 22, 3 to 20, 3 to 18, 3 to 17, 3 to 15, 3 to 13, 3 to 12, 5 to 30, 5 to 29, 5 to 28, 5 to 26, 5 to 25, 5 to 22, 5 to 20, 5 to 18, 5 to 17, 5 to 15, 5 to 13, 5 to 12, 8 to 30, 8 to 29, 8 to 28, 8 to 26, 8 to 25, 8 to 22, 8 to 20, 8 to 18, 8 to 17, 8 to 15, 8 to 13, 8 to 12, 10 to 30, 10 to 29, 10 to 28, 10 to 26, 10 to 25, 10 to 22, 10 to 20, 10 to 18, 10 to 17, 10 to 15, 12 to 30, 12 to 28, 12 to 25, 15 to 30, 15 to 28, 15 to 25, 16 to 30, 16 to 28, 16 to 25, 18 to 30, 18 to 28, or 20 to 30.

When the $TS_{MD}/(TS_{TD})^2$ satisfies the above range, the tear ratio is excellent; thus, when the label is separated from the container, it can be readily removed; and, when torn, it can be neatly removed along the removal line without deviating from the guided removal line.

In addition, in Equation 1, DT - Tg, which is the difference between the elongation temperature (DT) and the glass transition temperature (Tg) of the resin, may be 5°C to 20°C, 6°C to 20°C, 8°C to 20°C, 8°C to 19°C, 8°C to 18°C, or 8°C to 17°C. When DT - Tg satisfies the above range, it may be more advantageous for achieving the desired effect.

Here, DT is the stretching temperature (°C) of the stretched polyester-based film. The DT may be a temperature higher than the glass transition temperature (Tg) of the polyester resin by 5°C or more, 6°C or more, 8°C or more, or 10°C or more. For example, the DT may be a temperature higher than the glass transition temperature (Tg) of the polyester resin by 5°C to 20°C. Specifically, the DT may be 50°C to 180°C, 60°C to 170°C, 60°C to 150°C, 60°C to 120°C, 60°C to 100°C, 70°C to 120°C, 70°C to 100°C, or 80°C to 95°C. When the DT satisfies the above range, it may be more advantageous for achieving the desired effect.

Tg is the glass transition temperature (°C) of the polyester resin. It may be 45°C to 170°C, 55°C to 150°C, 60°C to 100°C, 62°C to 90°C, 63°C to 85°C, 63°C to 82°C, 63°C to 80°C, 68°C to 79°C, 69°C to 78°C, 70°C to 78°C, or 71°C to 78°C. If the glass transition temperature of the polyester resin is too low, it may break during the thermal treatment procedure during the processing and preparation process into a stretched film. If it is too high, enough elongation for label application may not be possible.

The Tg may be measured by differential scanning calorimetry (DSC) while a resin sample is heated in the range of 25°C to 150°C at a rate of 10 K/minute.

Meanwhile, the stretched polyester-based film may have a shrinkage stress of 12.0 MPa or less at 85°C, and it may be 2.0 MPa to 11.0 MPa, 2.5 MPa to 10 MPa, 3 MPa to 10 MPa, 3.5 MPa to 10 MPa, 3.5 MPa to 9.5 MPa, or 3.5 MPa to 8.0 MPa. When the shrinkage stress of the stretched polyester-based film satisfies the above range, when it is applied to a label for a container, its adhesiveness is excellent, and it is possible to minimize the problems of container deformation such as defects or distortion due to uneven shrinkage.

Meanwhile, the stretched polyester-based film may have a heat shrinkage rate ($TTS_{85}$) in the direction (TD) perpendicular to the machine direction of 40% or more as represented by the following Equation 2-1:

[Equation 2-1]

$$Heat\ shrinkage\ rate\ (TTS_{85}, \%) = \frac{TL_{25} - TL_{85}}{TL_{25}} \times 100$$

In Equation 2-1, $TL_{25}$ is the length of a specimen of the stretched polyester-based film in the direction (TD) perpendicular to the machine direction at 25°C, and $TL_{85}$ is the length of the stretched polyester-based film specimen in the direction (TD) perpendicular to the machine direction after immersion in hot water at 85°C for 10 seconds.

The heat shrinkage rate ($TTS_{85}$) of the stretched polyester-based film in the direction (TD) perpendicular to the machine direction may be 40% or more, 50% or more, or 60% or more, or it may be 40% to 85%, 40% to 80%, 40% to 75%, 50% to 90%, 50% to 80%, 50% to 75%, 60% to 90%, 60% to 80%, or 60% to 75%. When the heat shrinkage rate ($TTS_{85}$) of the stretched polyester-based film in the direction (TD) perpendicular to the machine direction satisfies the above range, when it is applied to a label for a container, its adhesiveness is excellent, and it is possible to minimize the problems of container deformation such as defects or distortion due to uneven shrinkage.

In addition, the stretched polyester-based film may have a heat shrinkage rate ($MTS_{85}$) in the machine direction (MD) of -20% to 15% as represented by the following Equation 2-2:

[Equation 2-2]

$$Heat\ shrinkage\ rate\ (MTS_{85}, \%) = \frac{ML_{25} - ML_{85}}{ML_{25}} \times 100$$

In Equation 2-2, $ML_{25}$ is the length of a specimen of the stretched polyester-based film in the machine direction at 25°C, and $ML_{85}$ is the length of the stretched polyester-based film specimen in the machine direction (MD) after immersion in hot water at 85°C for 10 seconds.

Specifically, the heat shrinkage rate ($MTS_{85}$) of the stretched polyester-based film in the machine direction (MD) may be -20% to 15%, -20% to 10%, -15% to 15%, -15% to 10%, -13% to 10%, or -12% to 5%.

When the heat shrinkage rate ($MTS_{85}$) of the stretched polyester-based film in the machine direction (MD) satisfies the above range, when it is applied to a label for a container, shrinkage in the machine direction (MD) is small, which minimizes the occurrence of wrinkles, and it is possible to minimize the problems of container deformation such as distortion due to uneven shrinkage.

Meanwhile, according to an embodiment, the stretched polyester-based film may comprise the copolymerized polyester resin in an amount of 100% by weight.

In addition, the stretched polyester-based film may further comprise a crystalline resin of a different type. Specifically, the stretched polyester-based film may comprise a mixed resin of the copolymerized polyester resin and a crystalline resin of a different type. For example, the crystalline resin of a different type may comprise a polyethylene terephthalate resin, but it is not limited thereto.

When the stretched polyester-based film comprises a mixed resin, the copolymerized polyester resin may be employed in an amount of 5 to 95% by weight, 10 to 95% by weight, 20 to 95% by weight, 30 to 90% by weight, 40 to 80% by weight, 50 to 90% by weight, 60 to 90% by weight, or 70 to 80% by weight, based on the total weight of the resins in the stretched polyester-based film.

In addition, the crystalline resin of a different type may comprise a polyethylene terephthalate resin in an amount of 1% by weight to 10% by weight, 5% by weight to 35% by weight, 10% by weight to 50% by weight, 10% by weight to 40% by weight, or 20% by weight to 30% by weight, based on the total weight of the resins in the stretched polyester-based film. When the content of the polyethylene terephthalate resin satisfies the above range, the stretched polyester-based film can enhance thermal properties and further enhance crystallinity and ease of removal from a container, which can be advantageous in securing excellent recyclability.

When the stretched polyester-based film comprises a mixed resin, the weight ratio of the copolymerized polyester resin and the crystalline resin of a different type may be 50:50 to 90:10, 60:40 to 90:10, 70:30 to 90:10, 50:50 to 80:20, 50:50 to 75:25, 60:40 to 80:20, 60:40 to 75:25, or 60:40 to 70:30.

The polyethylene terephthalate resin may refer to a resin containing a polyethylene terephthalate structure in which terephthalic acid (TPA) or dimethylterephthalic acid (DMT) is polymerized with ethylene glycol (EG) in an amount of 90% by weight or more, 95% by weight or more, 97% by weight or more, or 98% by weight or more.

In addition, the polyethylene terephthalate resin may be a recycled polyethylene terephthalate resin (PCR-PET) or may comprise a resin comprising a structural unit derived from terephthalic acid comprising at least one selected from recycled terephthalic acid, recycled dimethyl terephthalic acid, recycled bis-2-hydroxyethyl terephthalate, and recycled hydroxyethyl terephthalic acid.

In addition, the polyethylene terephthalate resin may comprise a resin comprising a structural unit derived from recycled ethylene glycol.

The stretched polyester-based film may have a single-layer or multi-layer structure.

The stretched polyester-based film may have a thickness of 10 μm to 250 μm, 10 μm to 200 μm, 10 μm to 150 μm, 10 μm to 100 μm, 20 μm to 80 μm, 30 μm to 70 μm, 35 μm to 65 μm, 35 μm to 55 μm, 40 μm to 60 μm, or 35 μm to 50 μm.

## Copolymerized polyester resin

The copolymerized polyester resin contained in the stretched polyester-based film according to an embodiment may be one in which a diol component and a dicarboxylic acid component are copolymerized.

The tear index of the stretched polyester-based film according to an embodiment may vary depending on the types of monomers constituting the copolymerized polyester resin contained in the stretched polyester-based film, its physical properties, and the like.

Specifically, the copolymerized polyester resin, in which a dicarboxylic acid or a derivative thereof and a diol are polymerized, may have a structure in which an acid moiety derived from a dicarboxylic acid or a derivative thereof and a diol moiety derived from a diol comprising ethylene glycol and a derivative thereof are repeated.

In the present specification, the acid moiety and the diol moiety each refer to a residue remaining after a dicarboxylic acid or its derivative and a diol are polymerized, and hydrogen, a hydroxyl group, or an alkoxy group is removed from them. Although the dicarboxylic acid or a derivative thereof and the diol will be described in more detail below, for example, the dicarboxylic acid or a derivative thereof may mainly be terephthalic acid or a derivative thereof, and the diol may comprise ethylene glycol and further comprise a derivative thereof.

The copolymerized polyester resin may comprise a linear glycol monomer residue and a cyclic monomer residue.

The cyclic monomer residue may be derived from a dicarboxylic acid or a derivative thereof or a diol other than ethylene glycol. The dicarboxylic acid or a derivative thereof and the diol other than ethylene glycol are not limited as long as they are used in copolymerized polyester resins and are monomers having an aliphatic or aromatic ring structure in their molecular structures. For example, they may be at least one selected from the group consisting of 1,4-cyclohexanedimethanol, 1,4-cyclohexanedicarboxylic acid, and terephthalic acid or a derivative thereof. The terephthalic acid or a derivative thereof may be at least one selected from the group consisting of terephthalic acid, dimethyl terephthalic acid, hydroxyethyl terephthalic acid, recycled terephthalic acid, recycled dimethyl terephthalic acid, and recycled hydroxyethyl terephthalic acid.

The content of the cyclic monomer residue may be 50% by mole to 80% by mole, 50% by mole to 55% by mole, 55% by mole to 65% by mole, or 65% by mole to 75% by mole, based on 100% by mole of the entire residues.

The linear glycol monomer residue may be derived from a diol. The diol is not limited as long as it is used in copolymerized polyester resins and has a linear molecular structure. For example, it may be derived from at least one selected from the group consisting of ethylene glycol, diethylene glycol, neopentyl glycol, recycled ethylene glycol, recycled diethylene glycol, and recycled neopentyl glycol.

The content of the linear glycol monomer residues excluding ethylene glycol is used as a variable. In such an event, the content of the linear glycol monomer residue excluding ethylene glycol may be 25% by mole or less based on 100% by mole of the entire residues. Specifically, the content of the linear glycol monomer residue excluding ethylene glycol may be 0.5 % by mole or more, 1 % by mole or more, 1.5 % by mole or more, 2.5 % by mole or more, 3.0 % by mole or more, 3.5 % by mole or more, 4.0 % by mole or more, 4.5 % by mole or more, 5.0 % by mole or more, or 5.5 % by mole or more, and 20 % by mole or less, 18 % by mole or less, 15 % by mole or less, or 14 % by mole or less, based on 100% by mole of the entire residues.

The diol in the copolymerized polyester resin may comprise ethylene glycol. If the ethylene glycol is not employed, the tear strength in the machine direction (MD) becomes too high; thus, when applied to a label of a container and then separated, it may not be readily torn to be separated, and the shrinkage stress may be high.

According to an embodiment, the diol component comprises ethylene glycol and may comprise at least one selected from the group consisting of diethylene glycol, neopentyl glycol, cyclohexanedimethanol, recycled ethylene glycol, recycled diethylene glycol, recycled neopentyl glycol, and recycled cyclohexanedimethanol.

In addition, the stretched polyester-based film may comprise the diethylene glycol comonomer in an amount of 0.1 to 20% by mole. For example, it may comprise the diethylene glycol comonomer in an amount of 0.5 % by mole or more, 1 % by mole or more, 1.5 % by mole or more, 2.5 % by mole or more, 3.0 % by mole or more, 3.5 % by mole or more, 4.0 % by mole or more, 4.5 % by mole or more, 5.0 % by mole or more, or 5.5 % by mole or more, and 20 % by mole or less, 18 % by mole or less, 15 % by mole or less, or 14 % by mole or less.

In addition, the stretched polyester-based film may comprise at least one comonomer selected from the group consisting of neopentyl glycol and diethylene glycol in an amount of 2.5% by mole or more. For example, the stretched polyester-based film may comprise at least one comonomer selected from the group consisting of neopentyl glycol and diethylene glycol in an amount of 3 % by mole or more, 5 % by mole or more or 8 % by mole or more, or 2.5 % by mole to 30 % by mole, 2.5 % by mole to 25 % by mole, 3 % by mole to 20 % by mole.

As the content of the comonomer satisfies the above range, it is more advantageous for achieving the desired tear index and tensile strength, along with excellent heat shrinkage in the main shrinkage direction, and the removability from a container can be enhanced.

In addition, when ethylene glycol and the comonomer are each employed in the above range, it is more advantageous for achieving the desired effects, the heat shrinkage rate is easily controlled, whereby it is possible to more effectively prevent wrinkles or deformation when the film is applied to a container, and the removability from the container can be further enhanced.

Meanwhile, the specific components contained in the stretched polyester-based film and their contents are as described below.

**Process for preparing a stretched polyester-based film**

According to an embodiment, there is provided a process for preparing the stretched polyester-based film described above.

Specifically, the process for preparing a stretched polyester-based film according to an embodiment comprises preparing a copolymerized polyester resin in which a diol and a dicarboxylic acid are copolymerized (S-1); and preparing a stretched polyester-based film from the polyester resin (S-2), wherein the tear index represented by the above Equation 1 may be less than 2.5.

Hereinafter, this will be described in detail.

Step (S-1): Preparation of a polyester resin

In step (S-1), a diol component and a dicarboxylic acid component are copolymerized to prepare a copolymerized polyester resin (a copolymer).

The copolymerized polyester resin may be prepared through an esterification reaction or a transesterification reaction of a dicarboxylic acid or a derivative thereof and a diol; and a polycondensation reaction of the esterification or transesterification reaction product.

A catalyst may be used in the esterification or transesterification reaction. The catalyst may be methylates of sodium and magnesium; acetates, borates, fatty acid salts, or carbonates of Zn, Cd, Mn, Co, Ca, and Ba; metal Mg; and oxides of Ti, Pb, Zn, Sb, and Ge.

The esterification reaction or transesterification reaction may be carried out in a batch, semi-continuous, or continuous type. Although each of the raw materials may be separately fed, it is preferable to feed them in the form of a slurry in which a diol and a dicarboxylic acid or a derivative thereof are mixed.

A polycondensation catalyst, stabilizer, coloring agent, crystallizing agent, antioxidant, branching agent, or the like may be added to the slurry before the initiation of the esterification reaction or transesterification reaction or to the product upon the completion of the reaction.

However, the timing of adding these additives is not particularly limited thereto, and they may be added at any time during the preparation step of the copolymerized polyester resin. As the polycondensation catalyst, one or more of common titanium, germanium, antimony, aluminum, and tin compounds may be properly selected to be used. Examples of the effective titanium-based catalyst include tetraethyl titanate, acetyl tripropyl titanate, tetrapropyl titanate, tetrabutyl titanate, polybutyl titanate, 2-ethylhexyl titanate, octylene glycol titanate, lactate titanate, triethanolamine titanate, acetyl acetonate titanate, ethyl acetoacetic ester titanate, isostearyl titanate, titanium dioxide, a copolymer of titanium dioxide and silicon dioxide, and a copolymer of titanium dioxide and zirconium dioxide. In addition, examples of the effective germanium-based catalyst include germanium dioxide and copolymers using the same. As the stabilizer, phosphorus-based compounds such as phosphoric acid, trimethyl phosphate, and triethyl phosphate may be commonly used. The amount thereof added may be such that 10 to 200 ppm relative to the weight of the final polymer (copolymerized polyester resin) based on the amount of phosphorus element. If the amount of the stabilizer added is less than 10 ppm, the stabilization effect is insignificant, whereby the polymer color may become yellowish. If it exceeds 200 ppm, a polymer with the desired high polymerization degree may not be obtained.

In addition, common colorants such as cobalt acetate and cobalt propionate may be exemplified as the colorant added to enhance the color of the polymer. The amount thereof added may be such that 10 to 200 ppm relative to the weight of the final polymer (copolymerized polyester resin) based on the amount of cobalt element. If necessary, anthraquinone-based compounds, perinone-based compounds, azo-based compounds, methine-based compounds, or the like may be used as an organic colorant. Commercially available toners such as Polysynthren Blue RLS from Clariant or Solvaperm Red BB from Clariant may be used. The amount of the organic compound colorant added may be adjusted to 0 to 50 ppm based on the weight of the final polymer. If the colorant is used in an amount outside the above range, the yellowing of the copolymerized polyester resin may not be sufficiently covered, or the physical properties thereof may be deteriorated.

A crystal nucleating agent, an ultraviolet absorber, a polyolefin resin, a polyamide resin, and the like may be exemplified as the crystallizing agent. Hindered phenol-based antioxidants, phosphite-based antioxidants, thioether-based antioxidants, or mixtures thereof may be exemplified as the antioxidant.

The esterification reaction may be carried out at a temperature of 200°C to 300°C or 230°C to 280°C; and a pressure of 0 to 10.0 kgf/cm$^2$ (0 to 7,355.6 mmHg), 0 to 5.0 kgf/cm$^2$ (0 to 3,677.8 mmHg), or 0.1 to 3.0 kgf/cm$^2$ (73.6 to 2,206.7 mmHg). In addition, the transesterification reaction may be carried out at a temperature of 150°C to 270°C or 180°C to 260°C; and a pressure of 0 to 5.0 kgf/cm$^2$ (0 to 3,677.8 mmHg) or 0.1 to 3.0 kgf/cm$^2$ (73.6 to 2,206.7 mmHg). The pressure given outside the parentheses refers to gauge pressure (in a unit of kgf/cm$^2$), and the pressure given in the parentheses refers to absolute pressure (in a unit of mmHg).

If the reaction temperature and pressure are outside the above ranges, there is a concern that the properties of the copolymerized polyester resin may deteriorate. The reaction time (average residence time) is usually 1 to 24 hours or 2 to 8 hours, which may vary depending on the reaction temperature, pressure, and the molar ratio of the diol to the dicarboxylic acid or a derivative thereof used.

The product obtained through the esterification or transesterification reaction may be prepared into a copolymerized polyester resin having a higher degree of polymerization through a polycondensation reaction. In general, the polycondensation reaction is carried out at a temperature of 150°C to 300°C, 200°C to 290°C, or 260°C to 290°C and a reduced pressure of 400 to 0.01 mmHg, 100 to 0.05 mmHg, or 10 to 0.1 mmHg. Here, the pressure refers to absolute pressure. The reduced pressure of 400 to 0.01 mmHg is intended to remove unreacted substances and a glycol, which is a by-product of the polycondensation reaction. Thus, if the reduced pressure is outside the above range, there is a concern that the removal of by-products and unreacted substances may be insufficient. In addition, if the polycondensation reaction temperature is outside the above range, there is a concern that the properties of the copolymerized polyester resin may deteriorate. The polycondensation reaction may be carried out for the required time until the desired intrinsic viscosity is reached, for example, for 1 hour to 24 hours.

For the purpose of reducing the content of unreacted substances remaining in the copolymerized polyester resin, the reaction in a vacuum may be intentionally maintained for a long period of time at the end of the esterification reaction or transesterification reaction or at the initiation of the polycondensation reaction, that is, when the viscosity of the resin is not sufficiently high in order to discharge the unreacted raw materials out of the system. As the viscosity of the resin increases, it becomes difficult for the raw materials remaining in the reactor to be discharged to the outside. As an example, the reaction product obtained through the esterification reaction or transesterification reaction prior to the polycondensation reaction may be allowed to stand under a reduced pressure of about 400 to 1 mmHg or about 200 to 3 mmHg for 0.2 to 3 hours to effectively remove the unreacted substances remaining in the copolymerized polyester resin. In such an event, the temperature of the product may be controlled to be equal to the esterification reaction or transesterification reaction temperature and the polycondensation reaction temperature, or between them.

The intrinsic viscosity of the polymer upon the polycondensation reaction is suitably 0.30 to 1.0 dl/g. If the intrinsic viscosity is less than 0.30 dl/g, the reaction rate in a solid-state reaction is significantly reduced. If the intrinsic viscosity exceeds 1.0 dl/g, the viscosity of the melt increases during the melt polymerization, which increases the possibility of the polymer being discolored due to shear stress between the stirrer and the reactor, and by-products such as acetaldehyde also increase.

The copolymerized polyester resin according to an embodiment may be further subjected to a solid-state reaction after the polycondensation reaction, if necessary, to have a higher degree of polymerization.

Specifically, the polymer obtained through the polycondensation reaction is discharged from the reactor and granulated. The method of granulation may be a strand cutting method in which the polymer is extruded into a strand shape, solidified in a cooling liquid, and then cut with a cutter, or an underwater cutting method in which the die hole is immersed in a cooling liquid, and the polymer is extruded directly into the cooling liquid and then cut with a cutter. In general, in the strand cutting method, the temperature of the cooling liquid must be kept low so that the strands are well solidified to prevent problems in cutting. In the underwater cutting method, it is preferable to maintain the temperature of the cooling liquid at a level suitable for the polymer so that the shape of the polymer is uniform. However, for crystalline polymers, the temperature of the cooling liquid may be deliberately kept high to induce crystallization during extrusion.

Removal of water-soluble raw materials in the unreacted raw materials is possible through water washing of the granulated polymer. The smaller the granule size, the greater the surface area relative to the granule weight; thus, a smaller granule size is more advantageous. To achieve this objective, the granules may be prepared to have an average weight of about 15 mg or less. As an example, the granulated polymer may be washed by leaving it in water at a temperature equal to the glass transition temperature of the polymer or at about 50°C to 100°C for 5 minutes to 10 hours.

**Dicarboxylic acid or a derivative thereof**

The dicarboxylic acid component refers to a main monomer that constitutes the copolymerized polyester resin together with a diol component.

In the present specification, the "dicarboxylic acid or a derivative thereof" refers to at least one compound selected from dicarboxylic acids and derivatives of the dicarboxylic acids. In addition, the "derivatives of the dicarboxylic acids" refer to alkyl esters of a dicarboxylic acid (lower alkyl esters having 1 to 4 carbon atoms, such as monomethyl, monoethyl, dimethyl, diethyl, or dibutyl esters) and anhydrides of a dicarboxylic acid. Thus, for example, terephthalic acid or a derivative thereof collectively refers to a compound that can react with a diol to form a terephthaloyl moiety, such as terephthalic acid; monoalkyl or dialkyl terephthalate; and terephthalic anhydride.

Specifically, in the present specification, the residue of the dicarboxylic acid component may comprise at least one residue selected from the group consisting of terephthalic acid, dimethyl terephthalic acid, hydroxyethyl terephthalic acid, and derivatives thereof. More specifically, the terephthalic acid or a derivative thereof may be at least one selected from the group consisting of terephthalic acid, dimethyl terephthalic acid, hydroxyethyl terephthalic acid, recycled terephthalic acid, recycled dimethyl terephthalic acid, and recycled hydroxyethyl terephthalic acid.

In addition, the copolymerized polyester resin may comprise an acid moiety derived from a comonomer other than terephthalic acid or a derivative thereof. Specifically, the comonomer may be at least one selected from the group consisting of aromatic dicarboxylic acids having 8 to 14 carbon atoms or derivatives thereof and aliphatic dicarboxylic acids having 4 to 12 carbon atoms or derivatives thereof. Examples of the aromatic dicarboxylic acid having 8 to 14 carbon atoms or derivatives thereof include isophthalic acid, naphthalenedicarboxylic acids such as 2,6-naphthalenedicarboxylic acid, diphenyl dicarboxylic acid, 4,4'-stilbendicarboxylic acid, 2,5-furandicarboxylic acid, 2,5-thiophenedicarboxylic acid, and the like, but the specific examples of the aromatic dicarboxylic acid are not limited thereto. Examples of the aliphatic dicarboxylic acid having 8 to 14 carbon atoms or derivatives thereof include linear, branched, or cyclic aliphatic dicarboxylic acid components such as cyclohexanedicarboxylic acids such as 1,4-cyclohexanedicarboxylic acid and 1,3-cyclohexanedicarboxylic acid, phthalic acid, sebacic acid, succinic acid, isodecylsuccinic acid, maleic acid, fumaric acid, adipic acid, glutaric acid, azelaic acid, and the like, but the specific examples of the aliphatic dicarboxylic acid are not limited thereto. Specifically, the comonomer, other than terephthalic acid or a derivative thereof, may be at least one selected from the group consisting of isophthalic acid, 2,6-naphthalenedicarboxylic acid, adipic acid, azelaic acid, succinic acid, and 1,4-cyclohexanedicarboxylic acid.

In addition, the dicarboxylic acid or a derivative thereof may comprise terephthalic acid or a derivative thereof in an amount of greater than 70% by mole and at least one selected from the group consisting of aromatic dicarboxylic acids having 8 to 14 carbon atoms or derivatives thereof and aliphatic dicarboxylic acids having 4 to 12 carbon atoms or derivatives thereof in an amount of 30% by mole or less based on 100% by mole of the entire dicarboxylic acid or a derivative thereof.

**Diol component**

The diol component in the present specification refers to a main monomer that constitutes the copolymerized polyester resin together with the dicarboxylic acid component described above. In particular, the diol component may comprise diethylene glycol, neopentyl glycol, or cyclohexanedimethanol, as a comonomer, in addition to ethylene glycol. In addition, recycled ethylene glycol, recycled diethylene glycol, or recycled neopentyl glycol may be used as the monomer of the diol component.

The ethylene glycol may be a component that can contribute to enhancing the transparency and impact resistance of a copolymerized polyester resin. Preferably, the ethylene glycol residue may be contained in an amount of 25 to 90% by mole, 25 to 80% by mole, 25 to 70% by mole, 30 to 70% by mole, 40 to 80% by mole, or 50 to 80% by mole, based on 100% by mole of the entire residues.

The diethylene glycol may be a component that can contribute to adjusting the shrinkage characteristics of a copolymerized polyester resin. Preferably, the content of the diethylene glycol may be 1.0 % by mole or more, 1.5 % by mole or more, 2.0 % by mole or more, 2.5 % by mole or more, 3.0 % by mole or more, 3.5 % by mole or more, 4.0 % by mole or more, 4.5 % by mole or more, 5.0 % by mole or more, or 5.5 % by mole or more, and 20 % by mole or less, 18 % by mole or less, 15 % by mole or less, or 14 % by mole or less, based on 100% by mole of the entire residues.

The cyclohexanedimethanol (e.g., 1,2-cyclohexanedimethanol, 1,3-cyclohexanedimethanol, and 1,4-cyclohexanedimethanol) may be a component that can contribute to enhancing the transparency and impact resistance of a copolymerized polyester resin produced. Preferably, the content of the cyclohexanedimethanol residue may be 5 to 35% by mole, 6 to 33% by mole, or 7 to 30% by mole, based on 100% by mole of the entire residues of the copolymerized polyester resin.

## Step (S-2): Preparation of a stretched polyester-based film

In step (S-2), a stretched polyester-based film is prepared from the polyester resin obtained in step (S-1).

According to an embodiment, the stretched polyester-based film may comprise the copolymerized polyester resin in an amount of 100% by weight.

In addition, the stretched polyester-based film may further comprise a crystalline resin of a different type. Specifically, the stretched polyester-based film may comprise a mixed resin of the copolymerized polyester resin and a crystalline resin of a different type. The crystalline resin of a different type contained in the mixed resin and its content are as described above.

Meanwhile, the preparation of the stretched polyester-based film may be carried out by a conventionally known method. Specifically, a stretched film may be prepared through an extrusion step of a resin comprising a polyester resin, a stretching step, and/or a heat-setting step.

Specifically, the preparation of the stretched polyester-based film may be carried out by extruding (melt extrusion) the polyester resin or a mixed resin of the polyester resin and a crystalline resin of a different type to prepare an unstretched sheet; and stretching the unstretched sheet.

The step of extruding (melt extrusion) the polyester resin or a mixed resin of the polyester resin and a crystalline resin of a different type may be carried out through an extruder. In such an event, the melt extrusion temperature is not particularly limited, but it may be 180°C to 310°C, 200°C to 310°C, 230°C to 310°C, 240°C to 300°C, or 250°C to 290°C. An unstretched sheet may be obtained through such a step, and the unstretched sheet thus obtained may be transferred to a stretching step. The unstretched sheet may be preheated to a predetermined temperature (e.g., 50°C to 120°C) before being subjected to the stretching step.

The stretching step may be carried out by uniaxially stretching the unstretched sheet obtained through the extrusion (melt extrusion) step in the machine direction (MD) or the direction (TD) perpendicular to the machine direction, or by biaxially stretching it in the machine direction (MD) and the direction (TD) perpendicular to the machine direction.

Stretching in the machine direction (MD) may be carried out at a stretching ratio of 1 to 5 times (100% to 500%) or 1.1 to 4.5 times (110% to 450%) at 55°C to 180°C or 60°C to 170°C. In addition, stretching in the direction (TD) perpendicular to the machine direction may be carried out at a stretching ratio of 1.5 to 6 times (150% to 600%) or 2.5 to 5.5 times (250% to 550%) at 55°C to 180°C or 60°C to 170°C.

The stretched polyester-based film prepared by the above preparation process satisfies a specific range of tear index, and the tear index can be controlled by various methods.

Specifically, the tear index of the stretched polyester-based film may be adjusted depending on the type of resin contained in the stretched polyester-based film, the types of monomers constituting the resin and their ratio, the physical properties of the resin, the stretching conditions (stretching temperature, stretching ratio, and the like), the physical properties of the stretched polyester-based film prepared from the resin, and the like.

In addition, by virtue of the tear index adjusted in this manner to have a specific range, it can be advantageously used as a heat-shrinkable film applied to a packaging material and/or a label for plastic containers. Further, when recycled, the plastic container and the label can be readily separated, thereby significantly enhancing the efficiency of the recycling process.

## Article

According to an embodiment, there is provided an article, which is formed from the stretched polyester-based film.

Specifically, the article may be formed from a stretched polyester-based film, which comprises a copolymerized polyester resin in which a diol component and a dicarboxylic acid component are copolymerized, and which has a tear index represented by the above Equation 1 of less than 2.5.

The article may be obtained by molding a resin comprising the polyester resin using a molding method such as extrusion and injection. It may be a film (or sheet) or a component used in the fields of automobiles, electricity, and electronics.

In addition, the article may comprise labels or cap seals for various containers such as plastic, or packaging supplies.

Hereinafter, a preferred embodiment is presented for the understanding of the present invention. However, the following examples are provided only to help easily understand the present invention, and the scope of the present invention is not limited thereby.

## Embodiments for Carrying Out the Invention

## Preparation of a stretched polyester-based film

**Example 1**

**(1) Preparation of a copolymerized polyester resin**

**Step (1): Esterification reaction**

A 10-liter reactor equipped with a column and a condenser that can be cooled by water was charged with terephthalic acid (TPA, 2,350 g), ethylene glycol (EG, 970 g), 1,4-cyclohexanedimethanol (CHDM, 330 g), and diethylene glycol (DEG, 220 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The copolymerized polyester resin was fed to an extruder and melt-extruded at a temperature of 180°C to 310°C to prepare an unstretched polyester sheet. Subsequently, the unstretched sheet was heated to a temperature higher than the glass transition temperature (Tg) of the polyester resin by 5°C to 20°C, stretched only in the transverse direction (TD) at a stretch ratio of 5 times, and then heat-set to produce a stretched polyester-based film having a thickness of 50 μm.

**Example 2**

**(1) Preparation of a copolymerized polyester resin**

**Step (1): Esterification reaction**

A 10-liter reactor equipped with a column and a condenser that can be cooled by water was charged with terephthalic acid (TPA, 305 g), 1,4-cyclohexanedimethanol (CHDM, 900 g), recycled bis-hydroxyethyl terephthalate (r-BHET, 4,200 g), and diethylene glycol (DEG, 10 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.68 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Example 3**

**(1) Preparation of a copolymerized polyester resin**

**Step (1): Esterification reaction**

A 10-liter reactor equipped with a column and a condenser that can be cooled by water was charged with terephthalic acid (TPA, 3,000 g), ethylene glycol (EG, 1,170 g), 1,4-cyclohexanedimethanol (CHDM, 700 g), and diethylene glycol (DEG, 190 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.72 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Example 4**

**(1) Preparation of a copolymerized polyester resin**

**Step (1): Esterification reaction**

A 10-liter reactor equipped with a column and a condenser that can be cooled by water was charged with terephthalic acid (TPA, 2,350 g), ethylene glycol (EG, 960 g), 1,4-cyclohexanedimethanol (CHDM, 430 g), and diethylene glycol (DEG, 140 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Example 5**

**(1) Preparation of a copolymerized polyester resin**

**Step (1): Esterification reaction**

A 10-liter reactor equipped with a column and a condenser that can be cooled by water was charged with terephthalic acid (TPA, 3,300 g), ethylene glycol (EG, 1,300 g), 1,4-cyclohexanedimethanol (CHDM, 430 g), 1,4-cyclohexanedicarboxylic acid (CHDA, 300 g), and diethylene glycol (DEG, 200 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.75 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Example 6**

**(1) Preparation of a copolymerized polyester resin**

**Step (1): Esterification reaction**

A 10-liter reactor equipped with a column and a condenser that can be cooled by water was charged with terephthalic acid (TPA, 2,300 g), isophthalic acid (IPA, 30 g), ethylene glycol (EG, 960 g), 1,4-cyclohexanedimethanol (CHDM, 420 g), and diethylene glycol (DEG, 150 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.72 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film, except that, as shown in Table 1 below, a resin composition was used in which the copolymerized polyester resin prepared in step (1) and a regenerated PET resin were mixed at a weight ratio of 70:30.

**Example 7**

**(1) Preparation of a copolymerized polyester resin**

**Step (1): Esterification reaction**

A 10-liter reactor equipped with a column and a condenser that can be cooled by water was charged with terephthalic acid (TPA, 3,000 g), ethylene glycol (EG, 1,200 g), recycled 1,4-cyclohexanedimethanol (recycled CHDM, 630 g), and diethylene glycol (DEG, 240 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Example 8**

**(1) Preparation of a copolymerized polyester resin**

**Step (1): Esterification reaction**

A 10-liter reactor equipped with a column and a condenser that can be cooled by water was charged with terephthalic acid (TPA, 2,300 g), ethylene glycol (EG, 930 g), 1,4-cyclohexanedimethanol (CHDM, 490 g), and diethylene glycol (DEG, 130 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film, except that, as shown in Table 1 below, a resin composition was used in which the copolymerized polyester resin prepared in step (1) and a regenerated PET resin were mixed at a weight ratio of 75:25.

**Example 9**

**(1) Preparation of a copolymerized polyester resin**

**Step (1): Esterification reaction**

A 10-liter reactor equipped with a column and a condenser that can be cooled by water was charged with terephthalic acid (TPA, 2,250 g), ethylene glycol (EG, 800 g), 1,4-cyclohexanedimethanol (CHDM, 650 g), neopentyl glycol (NPG, 30 g), and diethylene glycol (DEG, 140 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.72 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Comparative Example 1**

**(1) Preparation of a copolymerized polyester resin**

**Step (1): Esterification reaction**

A 10-liter reactor equipped with a column and a condenser that can be cooled by water was charged with terephthalic acid (TPA, 3,300 g), ethylene glycol (EG, 1,650 g), neopentyl glycol (NPG, 360 g), and diethylene glycol (DEG, 230 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C until the mixture became transparent while the mixture in the reactor was visually observed. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film, except that, as shown in Table 2 below, the copolymerized polyester resin prepared in step (1) was used.

**Comparative Example 2**

**(1) Preparation of a copolymerized polyester resin**

**Step (1): Esterification reaction**

A 10-liter reactor equipped with a column and a condenser that can be cooled by water was charged with terephthalic acid (TPA, 2,050 g), ethylene glycol (EG, 550 g), 1,4-cyclohexanedimethanol (CHDM, 1,060 g), and diethylene glycol (DEG, 100 g).

Subsequently, nitrogen was injected into the reactor to make the reactor pressurized by 1.0 kgf/cm$^2$ higher than normal pressure. Then, the temperature of the reactor was raised to 220°C over 90 minutes and maintained at 220°C for 2 hours, and the temperature was then raised again to 260°C over 2 hours. Thereafter, an esterification reaction was carried out at a temperature of 260°C while the mixture in the reactor was visually observed until the mixture became transparent. In this procedure, by-products were discharged through the column and condenser. Upon completion of the esterification reaction, nitrogen in the pressurized reactor was released to the outside to lower the pressure in the reactor to normal pressure, and the mixture in the reactor was then transferred to a 7-liter reactor capable of a reaction under vacuum.

**Step (2): Polycondensation reaction**

The pressure of the 7-liter reactor was reduced from normal pressure to 5 Torr (absolute pressure: 5 mmHg) over 30 minutes. At the same time, the temperature of the reactor was raised to 280°C over 1 hour, and a polycondensation reaction was carried out while the pressure of the reactor was maintained at 1 Torr (absolute pressure: 1 mmHg) or less. At the beginning of the polycondensation reaction, the stirring speed may be set high. As the polycondensation reaction proceeds, when the stirring power is weakened due to the increase in the viscosity of the reactants or the temperature of the reactants rises above the set temperature, the stirring speed may be appropriately adjusted accordingly. The polycondensation reaction was carried out until the intrinsic viscosity (IV) of the mixture (melt) in the reactor reached 0.70 dl/g. When the intrinsic viscosity of the mixture in the reactor reached the desired level, the mixture of polycondensation reaction was then discharged to the outside of the reactor to form strands, which were solidified with a cooling liquid and then granulated to have an average weight of about 12 to 14 mg to prepare a copolymerized polyester resin (copolymer).

**(2) Preparation of a stretched polyester-based film**

The same process for preparing a stretched polyester-based film as in Example 1 was carried out to prepare a stretched polyester-based film.

**Comparative Example 3**

A commercially available oriented polystyrene film was used in Comparative Example 3.

**[Evaluation Example]**

The physical properties of the copolymerized polyester resins or polystyrene resin of Examples 1 to 9 and Comparative Examples 1 to 3 were each measured by the following methods and are shown in the table below.

**Evaluation Example 1: Intrinsic viscosity**

Each copolymerized polyester resin prepared was dissolved in orthochlorophenol (OCP) at a concentration of 0.12% at 150°C, which was measured for the intrinsic viscosity using an Ubbelohde viscometer in a constant temperature bath at 35°C. Specifically, the time ($t_0$) taken for the solvent to pass through a specific internal section of the viscometer tube (efflux time) and the time (t) taken for the solution to pass through were obtained. Thereafter, the $t_0$ and t values were substituted into Equation 3 to calculate specific viscosity. The specific viscosity value thus calculated was substituted into Equation 4 to calculate intrinsic viscosity.

$$[\text{Equation 3}]$$

$$\eta_{sp} = \frac{t - t_0}{t_0}$$

$$[\text{Equation 4}]$$

$$[\eta] = \frac{\sqrt{1 + 4A\eta_{sp}} - 1}{2AC}$$

**Evaluation Example 2: Glass transition temperature (Tg)**

The glass transition temperature was measured by differential scanning calorimetry (DSC). DSC 1 model of Mettler Toledo was used as the measuring device.

The glass transition temperature of each copolymerized polyester resin prepared was measured while a resin sample was heated in the range of 25°C to 150°C at a rate of 10 K/minute.

**Evaluation Example 3: Shrinkage stress**

The shrinkage stress of each copolymerized polyester resin prepared was measured by fixing both ends of the film after shrinkage initiation in the direction perpendicular to the machine direction (TD) under hot air conditions at 85°C and measuring the final shrinkage stress (TD) at 30°C (unit: MPa).

**Evaluation Example 4: Tear strength**

**Tear strength ($TS_{MD}$) in the machine direction (TD)**

$TS_{MD}$ is the tear strength (N/mm) in the machine direction (MD) of a stretched polyester-based film specimen. It was measured according to ASTM D1922 by extruding a prepared copolymerized polyester resin into a sheet, stretching it by 500% in the direction perpendicular to the machine direction, and then using a TGT-01 Tearing Tester from Leading Instruments under a weight (g) condition of 16 times the thickness ($\mu$m) of a specimen of the stretched polyester film. The resulting value was converted based on the thickness of the stretched polyester film specimen.

**Tear strength ($TS_{TD}$) in the direction perpendicular to the machine direction (TD)**

$TS_{TD}$ is the tear strength (N/mm) in the direction (TD) perpendicular to the machine direction of a stretched polyester-based film specimen. It was measured according to ASTM D1922 by extruding a prepared copolymerized polyester resin into a sheet, stretching it by 500% in the direction parallel to the machine direction, and then using a TGT-01 Tearing Tester from Leading Instruments under a weight (g) condition of 8 times the thickness ($\mu$m) of a specimen of the stretched polyester film. The resulting value was converted based on the thickness of the stretched polyester film specimen.

**Evaluation Example 5: Tear index**

The tear strength and glass transition temperature measured in the above evaluation examples were used in the following Equation 1 to calculate the tear index.

[Equation 1]

$$Tear\ index = \frac{TS_{MD}}{(TS_{TD})^2} \times \frac{1}{DT - Tg}$$

In Equation 1, $TS_{MD}$ is the tear strength (N/mm) in the machine direction (MD) of a specimen of the stretched polyester-based film, which is a numerical value excluding the unit, $TS_{TD}$ is the tear strength (N/mm) in the direction (TD) perpendicular to the machine direction of the stretched polyester-based film specimen, which is a numerical value excluding the unit, DT is the stretching temperature (°C) of the stretched polyester-based film, which is a numerical value excluding the unit, and Tg is the glass transition temperature (°C) of the polyester resin, which is a numerical value excluding the unit.

**Evaluation Example 6: Heat shrinkage rate and maximum shrinkage rate**

The stretched polyester-based film specimens obtained in Examples 1 to 9 and Comparative Examples 1 to 3 were each immersed in warm water at 85°C for 10 seconds for heat shrinkage. Then, the length in the direction (TD) perpendicular to the machine direction (MD) and the length in the machine direction (MD) of the stretched polyester-based film specimen were measured. They were used in the following Equations 2-1 and 2-2 to calculate the heat shrinkage ($TTS_{85}$) in the direction (TD) perpendicular to the machine direction and the heat shrinkage ($MTS_{85}$) in the machine direction (MD), respectively. The results are shown in Tables 3 and 4 below.
Specimen preparation: The stretched polyester-based films were each cut into a size of 4 cm $\times$ 4 cm and stored at room temperature (25°C).

$$Heat\ shrinkage\ rate\ (TTS_{85}, \%) = \frac{TL_{25} - TL_{85}}{TL_{25}} \times 100$$

In Equation 2-1, $TL_{25}$ is the length of a specimen of the stretched polyester-based film in the direction (TD) perpendicular to the machine direction at 25°C, and $TL_{85}$ is the length of the stretched polyester-based film specimen in the direction (TD) perpendicular to the machine direction after immersion in hot water at 85°C for 10 seconds.

[Equation 2-2]

$$Heat\ shrinkage\ rate\ (MTS_{85}, \%) = \frac{ML_{25} - ML_{85}}{ML_{25}} \times 100$$

In Equation 2-2, $ML_{25}$ is the length of a specimen of the stretched polyester-based film in the machine direction at 25°C, and $ML_{85}$ is the length of the stretched polyester-based film specimen in the machine direction (MD) after immersion in hot water at 85°C for 10 seconds.

[Table 1]

| | | | Example | | | | | | | | |
|---|---|---|---|---|---|---|---|---|---|---|---|
| | | | 1 | 2 | 3 | 4 | 5 | 6 | 7 | 8 | 9 |
| Residue (% by mole) | TPA | | 100 | 100 | 100 | 100 | 100 | 99 | 100 | 100 | 100 |
| | DEG | | 14 | 3 | 10 | 9.2 | 9.6 | 10 | 12 | 8.5 | 10 |
| | CHDM | | 16 | 30 | 27 | 21 | 14.9 | 20.5 | 23.5 | 24.5 | 33 |
| | CHDA | | - | - | - | - | 10 | - | - | - | - |
| | IPA | | - | - | - | - | - | 1 | - | - | - |
| | NPG | | - | - | - | - | - | - | - | - | 2 |
| | EG | | 70 | 67 | 63 | 69.8 | 65.5 | 68.5 | 64.5 | 67 | 55 |
| Mixing ratio (weight ratio) | Copolymerized polyester resin | | 100 | 100 | 100 | 100 | 100 | 70 | 100 | 75 | 100 |
| | Crystalline resin of a different type | | - | - | - | - | - | Recycled PET (30) | - | Recycled PET (25) | - |

TPA: terephthalic acid, IPA: isophthalic acid

CHDM: 1,4-cyclohexanedimethanol, CHDA: 1,4-cyclohexanedicarboxylic acid

DEG: diethylene glycol, NPG: neopentyl glycol, EG: ethylene glycol

[Table 2]

| | | Comparative Example | | |
|---|---|---|---|---|
| | | 1 | 2 | 3 |
| Residue (% by mole) | TPA | 100 | 100 | - |
| | DEG | 10.8 | 7.5 | |
| | CHDM | - | 60 | |
| | CHDA | - | - | |
| | IPA | - | - | |
| | NPG | 16.8 | - | |
| | EG | 89.2 | 32.5 | |
| Mixing ratio (weight ratio) | Copolymerized polyester resin | 100 | 100 | OPS 100 |
| | Crystalline resin of a different type | - | - | - |

OPS: oriented polystyrene

[Table 3]

| | Example | | | | | | | | |
|---|---|---|---|---|---|---|---|---|---|
| | 1 | 2 | 3 | 4 | 5 | 6 | 7 | 8 | 9 |
| Glass transition temperature (Tg, °C) | 71 | 78 | 71 | 72 | 72.1 | 78 | 71 | 79.5 | 71 |
| MD tear strength ($TS_{MD}$, N/mm) | 46 | 7.2 | 26.3 | 28.9 | 23.7 | 17.4 | 31.3 | 15 | 19 |
| TD tear strength ($TS_{TD}$, N/mm) | 1.3 | 2.0 | 1.5 | 1.1 | 1.2 | 1.3 | 1.2 | 1.1 | 1.2 |
| Stretching temp. (DT) - Tg (°C) | 19 | 16 | 13 | 12 | 11.9 | 8 | 17 | 10.5 | 19 |
| Tear index (($TS_{MD}/(TS_{TD})^2$)/(DT - Tg)) | 1.43 | 0.11 | 0.96 | 1.99 | 1.38 | 1.39 | 1.28 | 1.18 | 0.69 |
| Shrinkage stress (MPa) (at 85°C) | 4.5 | 7 | 5.5 | 8 | 5.5 | 9 | 6 | 10 | 3.5 |
| TD heat shrinkage rate ($TTS_{85}$) (TD (%) at 85°C) | 60 | 60 | 68 | 71 | 67 | 63 | 74 | 65 | 64 |

(continued)

| | Example | | | | | | | | |
|---|---|---|---|---|---|---|---|---|---|
| | 1 | 2 | 3 | 4 | 5 | 6 | 7 | 8 | 9 |
| TD heat shrinkage rate (MTS$_{85}$) (MD (%) at 85°C) | -3 | 3 | -12 | -5 | -7 | 0 | -4 | 0 | -10 |

[Table 4]

| | Comparative Example | | |
|---|---|---|---|
| | 1 | 2 | 3 |
| Glass transition temperature (Tg, °C) | 74 | 77.5 | 71.9 |
| MD tear strength (TS$_{MD}$, N/mm) | 86 | 42 | 6.2 |
| TD tear strength (TS$_{TD}$, N/mm) | 1.5 | 1.1 | 1.6 |
| Stretching temp. (DT) - Tg (°C) | 14.0 | 12.5 | 18.1 |
| Tear index ((TS$_{MD}$/(TS$_{TD}$)$^2$)/(DT - Tg)) | 2.7 | 2.8 | 0.1 |
| Shrinkage stress (MPa) (at 85°C) | 10 | 5 | 2.3 |
| TD heat shrinkage rate (TTS$_{85}$) (TD (%) at 85°C) | 46 | 72 | 58 |
| TD heat shrinkage rate (MTS$_{85}$) (MD (%) at 85°C) | 0 | -5 | -4 |

As can be seen from Tables 3 and 4 above, the stretched polyester-based films of Examples 1 to 9, in which the tear index was controlled to be less than 2.5, each had shrinkage characteristics to the extent that the container did not deform while having an appropriate range of tear strength.

In contrast, the stretched polyester-based films of Comparative Examples 1 and 2 having a tear index exceeding 2.5 each had excessively high tear strength or excessively reduced heat shrinkage rate in the direction perpendicular to the machine direction (TD) at 85°C. Specifically, the stretched polyester-based film of Comparative Example 1 had a tear index of 2.7. When the stretched polyester-based film is applied to a label on a container, it is not readily torn, and the quality of the product, such as packaging materials and labels, is poor, resulting in low utility.

Meanwhile, for the stretched film using the oriented polystyrene (OPS) resin of Comparative Example 3, the heat shrinkage rate in the direction perpendicular to the machine direction (TD) at 85°C was low, so that the heat shrinkage uniformity may be very low when it is applied to complex-shaped packaging applications. The thermal resistance is also low, so that the usability at high temperatures may be significantly lower than the stretched polyester-based films of the Examples of the present invention.

**Claims**

1. A stretched polyester-based film, which comprises a copolymerized polyester resin in which a diol component and a dicarboxylic acid component are copolymerized, and which has a tear index represented by the following Equation 1 of less than 2.5:

[Equation 1]

$$Tear\ index = \frac{TS_{MD}}{(TS_{TD})^2} \times \frac{1}{DT - Tg}$$

wherein, in Equation 1, TS$_{MD}$ is the tear strength (N/mm) in the machine direction (MD) of a specimen of the stretched polyester-based film, which is a numerical value excluding the unit, TS$_{TD}$ is the tear strength (N/mm) in the direction (TD) perpendicular to the machine direction of the stretched polyester-based film specimen, which is a numerical value excluding the unit, DT is the stretching temperature (°C) of the stretched polyester-based film, which is a numerical value excluding the unit, and Tg is the glass transition temperature (°C) of the polyester resin, which is a numerical value excluding the unit.

2. The stretched polyester-based film of claim 1, wherein, in Equation 1, $TS_{MD}/(TS_{TD})^2$ is 1 to 30, $TS_{MD}$ is 50 N/mm or less, and $TS_{TD}$ is 5.0 N/mm or less.

3. The stretched polyester-based film of claim 1, wherein, in Equation 1, DT - Tg is 5°C to 20°C.

4. The stretched polyester-based film of claim 1, which has a heat shrinkage rate ($TTS_{85}$) in the direction (TD) perpendicular to the machine direction of 40% or more as represented by the following Equation 2-1:

[Equation 2-1]

$$Heat\ shrinkage\ rate\ (TTS_{85}, \%) = \frac{TL_{25} - TL_{85}}{TL_{25}} \times 100$$

wherein, in Equation 2-1, $TL_{25}$ is the length of a specimen of the stretched polyester-based film in the direction (TD) perpendicular to the machine direction at 25°C, and $TL_{85}$ is the length of the stretched polyester-based film specimen in the direction (TD) perpendicular to the machine direction after immersion in hot water at 85°C for 10 seconds.

5. The stretched polyester-based film of claim 1, which has a heat shrinkage rate ($MTS_{85}$) in the machine direction (MD) of -20% to 15% as represented by the following Equation 2-2:

[Equation 2-2]

$$Heat\ shrinkage\ rate\ (MTS_{85}, \%) = \frac{ML_{25} - ML_{85}}{ML_{25}} \times 100$$

wherein, in Equation 2-2, $ML_{25}$ is the length of a specimen of the stretched polyester-based film in the machine direction at 25°C, and $ML_{85}$ is the length of the stretched polyester-based film specimen in the machine direction (MD) after immersion in hot water at 85°C for 10 seconds.

6. The stretched polyester-based film of claim 1, which has a shrinkage stress of 12.0 MPa or less at 85°C.

7. The stretched polyester-based film of claim 1, wherein the diol component comprises ethylene glycol and at least one comonomer selected from the group consisting of diethylene glycol, neopentyl glycol, cyclohexanedimethanol, recycled ethylene glycol, recycled diethylene glycol, recycled neopentyl glycol, and recycled cyclohexanedimethanol.

8. The stretched polyester-based film of claim 1, wherein the dicarboxylic acid component comprises at least one selected from the group consisting of terephthalic acid, dimethyl terephthalic acid, hydroxyethyl terephthalic acid, recycled terephthalic acid, recycled dimethyl terephthalic acid, and recycled hydroxyethyl terephthalic acid.

9. The stretched polyester-based film of claim 1, which further comprises a crystalline resin of a different type.

10. The stretched polyester-based film of claim 9, wherein the crystalline resin of a different type comprises a polyethylene terephthalate resin in an amount of 10% by weight to 50% by weight based on the total weight of the resins in the stretched polyester-based film.

11. The stretched polyester-based film of claim 10, wherein the polyethylene terephthalate resin is a recycled polyethylene terephthalate resin (PCR-PET) or comprises a resin comprising a structural unit derived from terephthalic acid comprising at least one selected from recycled terephthalic acid, recycled dimethyl terephthalic acid, recycled bis-2-hydroxyethyl terephthalate, and recycled hydroxyethyl terephthalic acid.

12. An article, which is formed from the stretched polyester-based film of claim 1.

## INTERNATIONAL SEARCH REPORT

| International application No. |
| --- |
| **PCT/KR2024/014068** |

| A. | CLASSIFICATION OF SUBJECT MATTER |
| --- | --- |

**C08J 5/18**(2006.01)i; **C08L 67/02**(2006.01)i; **B29C 55/02**(2006.01)i

According to International Patent Classification (IPC) or to both national classification and IPC

| B. | FIELDS SEARCHED |
| --- | --- |

Minimum documentation searched (classification system followed by classification symbols)

C08J 5/18(2006.01); B29C 55/14(2006.01); B29C 61/06(2006.01); B32B 27/20(2006.01); B65D 65/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르 수지(polyester resin), 필름(film), 테레프탈산(terephthalic acid, TPA), 에틸렌글리콜(ethylene glycol, EG), 디에틸렌글리콜(diethylene glycol, DEG), 1,4-사이클로헥산디메탄올(1,4-cyclohexanedimethanol, CHDM), 인열 강도(tearing strength)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-063244 A (MITSUBISHI CHEMICAL CORP.) 21 April 2022 (2022-04-21)<br>See paragraphs [0006], [0024], [0064], [0082], [0085], [0088], [0093], [0097], [0100], [0111] and [0112]; and table 1. | 1-12 |
| A | JP 7324962 B1 (TAKIRON CO., LTD. et al.) 10 August 2023 (2023-08-10)<br>See paragraphs [0062] and [0063]. | 1-12 |
| A | JP 2019-048470 A (MITSUBISHI CHEMICAL CORP.) 28 March 2019 (2019-03-28)<br>See paragraphs [0045] and [0058]. | 1-12 |
| A | JP 2014-012379 A (C I KASEI CO., LTD.) 23 January 2014 (2014-01-23)<br>See claim 1; and paragraphs [0014], [0015], [0020] and [0036]. | 1-12 |
| A | WO 2023-032429 A1 (C.I. TAKIRON CORPORATION) 09 March 2023 (2023-03-09)<br>See paragraphs [0084] and [0088]. | 1-12 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 December 2024** | **23 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014068**

| Patent document cited in search report | | | Publication date (day/month/year) | Patent family member(s) | | | Publication date (day/month/year) |
|---|---|---|---|---|---|---|---|
| JP | 2022-063244 | A | 21 April 2022 | JP | 2022-063089 | A | 21 April 2022 |
| | | | | JP | 7004048 | B1 | 04 February 2022 |
| JP | 7324962 | B1 | 10 August 2023 | CN | 118265747 | A | 28 June 2024 |
| | | | | DE | 112022005495 | T5 | 05 September 2024 |
| | | | | JP | 2023-153182 | A | 17 October 2023 |
| | | | | JP | 7342301 | B1 | 11 September 2023 |
| | | | | KR | 10-2024-0090870 | A | 21 June 2024 |
| | | | | WO | 2023-188469 | A1 | 05 October 2023 |
| JP | 2019-048470 | A | 28 March 2019 | JP | 6610763 | B2 | 27 November 2019 |
| JP | 2014-012379 | A | 23 January 2014 | JP | 5993635 | B2 | 14 September 2016 |
| WO | 2023-032429 | A1 | 09 March 2023 | CN | 117440982 | A | 23 January 2024 |
| | | | | DE | 112022002485 | T5 | 07 March 2024 |
| | | | | JP | 2023-145475 | A | 11 October 2023 |
| | | | | JP | 7375258 | B2 | 07 November 2023 |
| | | | | JP | 7411136 | B2 | 10 January 2024 |
| | | | | KR | 10-2024-0004952 | A | 11 January 2024 |
| | | | | TW | 202311349 | A | 16 March 2023 |
| | | | | US | 2024-0352202 | A1 | 24 October 2024 |
| | | | | WO | 2023-032429 | A1 | 09 March 2023 |

Form PCT/ISA/210 (patent family annex) (July 2022)

**EP 4 782 485 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20020062838